(19) Europäisches Patentamt
European Patent Office
Office européen des brevets

(11) **EP 4 431 647 A1**

(12) **EUROPEAN PATENT APPLICATION**
published in accordance with Art. 153(4) EPC

(43) Date of publication:
**18.09.2024  Bulletin 2024/38**

(51) International Patent Classification (IPC):
***D01F 9/22*** *(2006.01)*

(21) Application number: **22892782.8**

(52) Cooperative Patent Classification (CPC):
**D01F 9/22**

(22) Date of filing: **08.11.2022**

(86) International application number:
**PCT/JP2022/041607**

(87) International publication number:
**WO 2023/085284 (19.05.2023 Gazette 2023/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2021   JP 2021183635**

(71) Applicant: **Mitsubishi Chemical Corporation
Chiyoda-ku
Tokyo 100-8251 (JP)**

(72) Inventors:
• **OTA Kyu
  Tokyo 100-8251 (JP)**
• **WAKABAYASHI Kouki
  Tokyo 100-8251 (JP)**
• **HAMAMOTO Hiroki
  Tokyo 100-8251 (JP)**

(74) Representative: **Vossius & Partner
Patentanwälte Rechtsanwälte mbB
Siebertstrasse 3
81675 München (DE)**

(54) **CARBON FIBERS, CARBON FIBER BUNDLE, AND PRODUCTION METHOD FOR CARBON FIBER BUNDLE**

(57)    The present invention provides: a carbon fiber that gives a carbon fiber bundle having a high strand strength and a high strand elastic modulus and has reduced defects; a carbon fiber bundle including the carbon fiber; and a production method for a carbon fiber bundle having a high strand strength and a high strand elastic modulus and having reduced defects in single fibers. The carbon fiber of the present invention is such that the number of voids in a cross-section of a single fiber is 8 or less; the carbon fiber bundle of the present invention includes the carbon fiber of the present invention; and in the production method for a carbon fiber bundle of the present invention, a temperature increase rate in a case of raising a heating temperature from 1,800°C to 2,200°C is 300°C/min to 600°C/min.

EP 4 431 647 A1

**Description**

[Technical Field]

The present invention relates to a carbon fiber, a carbon fiber bundle, and a production method for a carbon fiber bundle.

Priority is claimed on Japanese Patent Application No. 2021-183635, filed November 10, 2021, the content of which is incorporated herein by reference.

[Background Art]

Carbon fibers have a higher specific strength and a higher specific elastic modulus as compared with other fibers. Carbon fibers are being widely developed as reinforcing fibers of composite materials in sports applications, aerospace applications, as well as in general industrial applications such as automobiles, public works, construction, pressure containers, and wind turbine blades. Therefore, there is a demand for further improvement in the performance of carbon fibers.

Among carbon fibers, polyacrylonitrile (PAN)-based carbon fibers, which are widely utilized, are generally industrially manufactured as follows. First, a spinning solution including an acrylonitrile-based polymer as a precursor is subjected to wet spinning, dry spinning, or dry-wet spinning to obtain a precursor acrylic fiber bundle. Next, the precursor acrylic fiber bundle is heated in an oxidizing atmosphere at a temperature of, for example, 180°C to 400°C to be converted into a flame-resistant fiber bundle. Thereafter, the flame-resistant fiber bundle is heated in an inert atmosphere at, for example, 1,000°C or higher to be carbonized, and thereby a carbon fiber bundle is obtained.

Carbon fibers are brittle materials. Since even slight defects cause a decrease in strength, studies have been made to reduce defects that are causative of breakage. As one of the above, methods for controlling defects of carbon fibers have been proposed (for example, Patent Document 1 and Patent Document 2).

In Patent Document 1, it is disclosed that, after a single fiber tensile test of a 10-mm carbon fiber bundle is carried out, a specific ratio (n/N) related to a defect of 50 nm or more is set to 35% or less, and an average single fiber diameter is set to 4.3 $\mu$m or more.

In Patent Document 2, a method for producing a carbon fiber bundle, the method including pulling a coagulated fiber bundle of a polyacrylonitrile-based polymer solution from a coagulation bath solution and then allowing the coagulated fiber bundle to stand in air for 10 seconds or more before being washed with water, is disclosed.

[Citation List]

[Patent Documents]

[Patent Document 1]
PCT International Publication No. WO 2018/003836
[Patent Document 2]
PCT International Publication No. WO 2020/195476

[Summary of Invention]

[Technical Problem]

In conventional carbon fiber bundles, it is difficult to increase the strand strength and the strand elastic modulus to high levels at the same time. This is because as the temperature at the time of heat-treating the precursor of a carbon fiber bundle is higher, a higher strand elastic modulus may be realized, while a higher strand strength is less likely to be realized.

Patent Document 1 discloses that the strand strength of the carbon fiber bundle is 8.0 GPa or more.

However, in the carbon fiber bundle described in Patent Document 1, a defect that may lead to breakage is evaluated in the single fiber tensile test. Under actual use conditions, defects that affect the strand strength and the strand elastic modulus may occur in the carbon fibers.

Patent Document 2 discloses that according to the production method, the number of voids is reduced by densifying the fiber surface, and the number of voids having a major axis of 3 nm or more present in a region extending from the fiber surface to a depth of 50 nm in a single fiber cross-section is 50 or less.

However, the carbon fiber bundle of Patent Document 2 has a low strand elastic modulus. In addition, in the Examples of Patent Document 2, since the number of voids is 9 or more, both the strand strength and the strand elastic modulus cannot be increased at the same time.

The present invention provides a carbon fiber that gives a carbon fiber bundle having a high strand strength and a high strand elastic modulus and has reduced defects, a carbon fiber bundle having a high strand strength and a high strand elastic modulus and having reduced defects in single fibers, and a production method for the carbon fiber bundle.

[Solution to Problem]

The present invention has the following aspects.

[1] A carbon fiber in which the number of voids in a cross-section of a single fiber is 8 or less,
method for measuring the number of voids: a single fiber of the carbon fiber is cut perpendicularly to a longitudinal direction, subsequently a thin slice including a cross-section of the carbon fiber is prepared, a TEM image at a magnification of 20,000 times of the cross-section of the carbon fiber in the thin slice is acquired by using a transmission electron microscope, the TEM image is subjected to a planarization treatment and a binarization treatment by using image analysis software, and then the number of white portions present in the cross-section is measured as the number of voids by using a "Count/Measurement" function of the image analysis software.

[2] The carbon fiber according to [1], wherein the carbon fiber has an average void length of 5 to 20 nm.

[3] The carbon fiber according to [1] or [2], wherein the carbon fiber has an average void diameter of 0.5 to 0.7 nm.

[4] The carbon fiber according to any one of [1] to [3], wherein the carbon fiber has a diameter of 4.0 to 7.0 $\mu$m.

[5] The carbon fiber according to any one of [1] to [4], wherein the carbon fiber has a fiber density of 1.70 to 1.90 g/cm$^3$.

[6] The carbon fiber according to any one of [1] to [5], wherein an area ratio of a low-density portion in the carbon fiber is 0.24% or less.

[7] The carbon fiber according to any one of [1] to [6], wherein a degree of complete crystallinity of a substrate structure in the carbon fiber is 0.43 or more.

[8] A carbon fiber bundle comprising: the carbon fiber according to any one of [1] to [7].

[9] A carbon fiber bundle in which single fibers of a plurality of carbon fibers are bundled, wherein the number of voids present in a region extending from a surface of the carbon fiber to a depth of 100 nm is 0.5 voids/$\mu$m or less with respect to a circumference of the carbon fiber.

[10] The carbon fiber bundle according to [8] or [9], wherein the carbon fiber bundle has a strand strength of 5.0 to 6.5 GPa.

[11] The carbon fiber bundle according to any one of [8] to [10], wherein the carbon fiber bundle has a strand elastic modulus of 360 to 400 GPa.

[12] The carbon fiber bundle according to any one of [8] to [11], wherein the number of the carbon fibers in the carbon fiber bundle is 8,000 to 20,000.

[13] A production method for a carbon fiber bundle, the method comprising:

heating a precursor fiber bundle,
wherein a temperature increase rate in a case of raising a heating temperature from 1,800°C to 2,200°C is 300°C/min to 600°C/min.

[14] The producing method according to [13], wherein a highest temperature of the heating temperature is 2,100°C to 2,300°C.

[15] The production method according to [13] or [14], wherein the precursor fiber bundle is a fiber bundle obtained by dry-wet spinning.

[16] The production method according to any one of [13] to [15], wherein a single fiber fineness of the precursor fiber bundle is 0.5 to 2.5 dtex, and the number of single fibers in the precursor fiber bundle is 8,000 to 20,000.

[Advantageous Effects of Invention]

According to the carbon fiber of the present invention, a carbon fiber bundle having a high strand strength and a high strand elastic modulus is obtained. In addition, the carbon fiber of the present invention has reduced defects.

The carbon fiber bundle of the present invention has a high strand strength and a high strand elastic modulus and has reduced defects in the single fibers.

According to the method for producing a carbon fiber bundle of the present invention, a carbon fiber bundle having a high strand strength and a high strand elastic modulus and having reduced defects in the single fibers is obtained.

[Description of Embodiments]

[Description of terms]

The term "void" is a void formed in a production process of the carbon fiber and is a white portion obtained by analyzing a transmission electron microscope image with image analysis software.

The "number of voids" can be measured by observation with a transmission electron microscope (TEM), and the detailed measurement method is as described in Examples.

The "number of surface layer voids" can be measured by observation with a transmission electron microscope (TEM), and the detailed measurement method is as described in Examples.

The "circumference of the carbon fiber" is the circumferential length of the carbon fiber in a cross-section in a direction perpendicular to the fiber axis of the carbon fiber.

Hereinafter, several embodiments of the present invention will be described in detail. The embodiments disclosed below are examples for describing the present invention. The present invention is not intended to be limited only to these embodiments. The present invention can be carried out in various aspects as long as the various aspects maintain the gist of the invention.

[Carbon Fiber]

(Carbon Fiber According to First Aspect)

With regard to a carbon fiber according to a first aspect of the present invention, the number of voids in a cross-section of a single fiber is 8 or less.

The number of voids in a cross-section of a single fiber being 8 or less means that the number of defects that may serve as the starting points of breakage in the surface layer of the single fiber is sufficiently small. Therefore, it is considered that the strand strength and the strand elastic modulus of the carbon fiber bundle are increased.

From this viewpoint, the number of voids is preferably 6 or less, more preferably 4 or less, and most preferably 0.

The method for measuring the number of voids is as follows. First, a single fiber of the carbon fiber is cut perpendicularly to the longitudinal direction, and then a thin slice including a cross-section of the carbon fiber is prepared. A TEM image at a magnification of 20,000 times of the cross-section of the carbon fiber in the thin slice is acquired using a transmission electron microscope. The TEM image is subjected to a planarization treatment and a binarization treatment by using image analysis software, and then the number of white portions present in the cross-section is measured as the number of voids by using a "Count/Measurement" function of the image analysis software. The same measurement is performed five times in total, and the average value thereof is designated as the number of voids.

The details of the method for measuring the number of voids are as described in Examples.

(Carbon Fiber According to Second Aspect)

With regard to a carbon fiber according to a second aspect of the present invention, the number of voids present in a region extending from a surface of the carbon fiber to a depth of 100 nm (hereinafter, described as "number of surface layer voids") is 0.5 voids/$\mu$m or less with respect to the circumference of the carbon fiber.

The number of surface layer voids being 0.5 voids/$\mu$m or less means that the number of defects that may serve as starting points of breakage in the surface layer of the single fiber is sufficiently small. Therefore, it is considered that the strand strength and the strand elastic modulus of the carbon fiber bundle are increased.

From this viewpoint, the number of surface layer voids is preferably 0.4 voids/$\mu$m or less, more preferably 0.3 voids/$\mu$m or less, and most preferably 0 voids/$\mu$m, with respect to the circumference of the carbon fiber.

When the number of surface layer voids is the upper limit value or less within the numerical value range, the defects included in the fibers can be reduced without decreasing the strand elastic modulus. In addition, the strand strength of the carbon fiber bundle is increased.

The method for measuring the number of surface layer voids is as follows. First, a single fiber of the carbon fiber is cut perpendicularly to the longitudinal direction, and then a thin slice including a cross-section of the carbon fiber is prepared. A TEM image at a magnification of 20,000 times of the cross-section of the carbon fiber in the thin slice is acquired using a transmission electron microscope. The TEM image is subjected to a planarization treatment and a binarization treatment by using image analysis software, and then the number of white portions present in a region extending from the surface of the carbon fiber to a depth of 100 nm is measured as the number of voids by using a "Count/Measurement" function of the image analysis software. In addition, the circumference of the carbon fiber is measured. The proportion of the number of voids to the circumference of the carbon fiber is calculated. The same measurement and calculation are performed five times in total, and the average value thereof is designated as the number of surface layer voids.

The details of the method for measuring the number of surface layer voids are as described in Examples.

(Preferred Embodiments of Carbon Fiber)

In the following description, the term "carbon fiber" is a generic term for the carbon fiber according to the first aspect and the carbon fiber according to the second aspect. Preferred embodiments that will be described below are common to the carbon fiber according to the first aspect and the carbon fiber according to the second aspect.

Examples of the type of the carbon fiber include a polyacrylonitrile (PAN)-based carbon fiber, a rayon-based carbon fiber, and a pitch-based carbon fiber. Among these, from the viewpoint of improving productivity and mechanical characteristics on an industrial scale, the PAN-based carbon fiber is preferable.

A pitch-based carbon fiber usually has a fiber density of 2.10 to 2.20 $g/cm^3$, which is higher than that of a PAN-based carbon fiber. In a general pitch-based carbon fiber bundle, the strand elastic modulus is high whereas the strand strength is low.

When voids are present in the carbon fiber according to an embodiment, the average void length of the voids is preferably 5 to 20 nm, more preferably 10 to 20 nm, and even more preferably 15 to 20 nm. When the average void length is the lower limit value or more within the numerical value range, bendability of the fiber is likely to be ensured. When the average void length is the upper limit value or less within the numerical value range, the strand strength of the carbon fiber bundle is likely to be maintained at a higher level.

The average void length can be measured by a small-angle X-ray scattering method (SAXS). The detailed measurement method is as described in Examples.

When voids are present in the carbon fiber according to an embodiment, the average void diameter of the voids is preferably 0.5 to 0.7 nm, more preferably 0.51 to 0.69 nm, and even more preferably 0.52 to 0.68 nm. When the average void diameter is the lower limit value or more within the numerical value range, bendability of the fiber is likely to be ensured. When the average void diameter is the upper limit value or less within the numerical value range, the strand strength of the carbon fiber bundle is likely to be maintained at a higher level.

The average void diameter can be measured by a small-angle X-ray scattering method (SAXS). The detailed measurement method is as described in Examples.

According to an embodiment, the diameter of the carbon fiber is preferably 4.0 to 7.0 $\mu$m, more preferably 4.9 to 6.0 $\mu$m, and even more preferably 5.0 to 5.8 $\mu$m. When the diameter of the carbon fiber is the lower limit value or more within the numerical value range, a carbon fiber having improved fiber-opening properties is likely to be obtained. When the diameter of the carbon fiber is the upper limit value or less within the numerical value range, the bundling properties of the carbon fiber bundle are likely to be maintained. As a result, handling is made easier.

The diameter of a single fiber is determined as follows.

The cross-sectional area per single fiber of the carbon fiber is calculated from the density ($g/cm^3$) of the carbon fiber bundle, the mass per meter (g/m) of the carbon fiber bundle, and the filament number in the carbon fiber bundle. The diameter of a perfect circle having the same area as the cross-sectional area is designated as the diameter of a single fiber of the carbon fiber.

According to an embodiment, the fiber density of the carbon fiber is preferably 1.70 to 1.90 $g/cm^3$, more preferably 1.75 to 1.85 $g/cm^3$, and even more preferably 1.78 to 1.83 $g/cm^3$.

When the fiber density of the carbon fiber is the lower limit value or more within the numerical value range, a carbon fiber having an improved strand strength is likely to be obtained. When the fiber density of the carbon fiber is the upper limit value or less within the numerical value range, a carbon fiber having an improved carbonization yield is likely to be obtained.

The fiber density is a value determined by the method described in Examples below.

According to an embodiment, the area ratio of a low-density portion of the carbon fiber is preferably 0.24% or less.

When the area ratio of the low-density portion of the carbon fiber is 0.24% or less, a carbon fiber having an improved strand strength is likely to be obtained. From this viewpoint, the area ratio of the low-density portion of the carbon fiber is more preferably 0.18% or less, and even more preferably 0.15% or less.

The area ratio of the low-density portion of the carbon fiber is determined by the method described in Examples below.

According to an embodiment, the degree of complete crystallinity of the substrate structure of the carbon fiber is preferably 0.43 or more.

When the degree of complete crystallinity of the substrate structure is 0.43 or more, a carbon fiber having an improved strand strength is likely to be obtained. From this viewpoint, the degree of complete crystallinity of the substrate structure is more preferably 0.45 or more, and even more preferably 0.50 or more.

The degree of complete crystallinity of the substrate structure of the carbon fiber is determined by the method described in Examples below.

[Carbon Fiber Bundle]

(Carbon Fiber Bundle According to First Aspect)

A carbon fiber bundle according to the first aspect of the present invention includes the above-mentioned carbon fiber according to the first aspect of the present invention.

When a plurality of the above-mentioned carbon fibers according to the first aspect are collected to form a carbon fiber bundle, the strand strength and the strand elastic modulus of the carbon fiber bundle can be increased.

The carbon fiber according to the first aspect relates to a carbon fiber in which the number of voids in a cross-section of a single fiber is 8 or less. The carbon fiber bundle according to the first aspect of the present invention is obtained by bundling a plurality of the carbon fibers according to the first aspect.

(Carbon Fiber Bundle According to Second Aspect)

A carbon fiber bundle according to the second aspect of the present invention includes the above-mentioned carbon fiber according to the second aspect of the present invention.

When a plurality of the above-mentioned carbon fibers according to the second aspect are collected to form a carbon fiber bundle, the strand strength and the strand elastic modulus of the carbon fiber bundle can be increased.

The carbon fiber bundle according to the second aspect of the present invention relates to a carbon fiber bundle in which single fibers of a plurality of carbon fibers are bundled, and in which the number of surface layer voids of the carbon fibers is 0.5 voids/$\mu$m or less with respect to the circumference of the carbon fiber.

The carbon fiber bundle according to the second aspect is such that the number of surface layer voids of the carbon fiber is 0.5 voids/$\mu$m or less with respect to the circumference of the carbon fiber. Therefore, the defects included in the fiber are reduced without lowering the strand elastic modulus. Moreover, the strand strength is also increased.

(Preferred Embodiments of Carbon Fiber Bundle)

In the following description, the term "carbon fiber bundle" is a generic term for the carbon fiber bundle according to the first aspect and the carbon fiber bundle according to the second aspect. Preferred embodiments that will be described below are common to the carbon fiber bundle according to the first aspect and the carbon fiber bundle according to the second aspect.

According to an embodiment, the carbon fiber bundle may include both the carbon fiber according to the first aspect and the carbon fiber according to the second aspect.

In addition, according to an embodiment, the carbon fiber bundle may include a carbon fiber other than the above-mentioned carbon fibers of the present invention, or does not have to include another carbon fiber. The other carbon fiber is a carbon fiber other than the carbon fiber according to the first aspect and the carbon fiber according to the second aspect.

When another carbon fiber is included, the proportion of the carbon fiber according to the present invention varies depending on desired physical properties; however, in order to increase the strand strength and the strand elastic modulus, the proportion is preferably 50% by mass or more, more preferably 80% by mass or more, and even more preferably 100% by mass.

According to an embodiment, the strand strength of the carbon fiber bundle is preferably 5.0 to 6.5 GPa, more preferably 5.5 to 6.4 GPa, and even more preferably 5.8 to 6.3 GPa.

When the strand strength is the lower limit value or more within the numerical value range, sufficient ductility is likely to be obtained when the carbon fiber bundle is produced into a composite. When the strand strength is the upper limit value or less within the numerical value range, a carbon fiber bundle can be obtained with high productivity.

The strand strength of the carbon fiber bundle is measured in conformity with JIS R 7608:2007.

According to an embodiment, the strand elastic modulus of the carbon fiber bundle is preferably 360 to 400 GPa, more preferably 370 to 395 GPa, and even more preferably 374 to 390 GPa. When the strand elastic modulus is the lower limit value or more within the numerical value range, sufficient rigidity is likely to be obtained when the carbon fiber bundle is produced into a composite. When the strand elastic modulus is the upper limit value or less within the numerical value range, the carbon fiber bundle can be obtained with high productivity.

The strand elastic modulus is measured in conformity with method A of JIS R 7608:2007.

According to an embodiment, the number of single fibers of the carbon fiber in the carbon fiber bundle is preferably 8,000 to 20,000, more preferably 10,000 to 19,000, and even more preferably 12,000 to 18,000.

When the number of carbon fibers is the lower limit value or more within the numerical value range, processability of the carbon fiber bundle is likely to be improved. When the number of carbon fibers is the upper limit value or less within the numerical value range, handleability of the carbon fiber bundle is likely to be improved.

(Production method for Carbon Fiber Bundle)

The production method for a carbon fiber bundle includes heating a precursor of a carbon fiber bundle, that is, a precursor fiber bundle. The present production method has a feature in which the temperature increase rate in a case of raising the heating temperature from 1,800°C to 2,200°C is 300°C/min to 600°C/min.

In the production methods in the related art, at the time of heating the precursor fiber bundle, it is common to rapidly raise the temperature to a highest temperature in order to obtain a desired elastic modulus, and then to maintain the highest temperature for a certain period of time. This is because the balance in the size and number of the carbonization furnace, productivity, the physical properties, and the like was taken into consideration. Therefore, the temperature increase rate was higher than the above-described range.

It is thought that the voids of the carbon fiber cannot be reduced at a high temperature increase rate. Some examples of the cause of the generation of voids in the carbon fiber will be shown below.

· When the fiber surface layer becomes rough in a state of a swelling yarn, an oil agent may penetrate into the fiber surface layer. When the carbon fiber is heated to a high temperature by a heating treatment during production, a trace of the oil agent remaining after decomposition may remain in the surface layer of the carbon fiber as voids.
· When the carbon fiber is heated to a high temperature by a heating treatment during production, as atoms other than carbon (for example, a hydrogen atom, a nitrogen atom, and an oxygen atom) may be eliminated from the chemical structure, micro voids may be formed.
· When there is a problem in the crystallization of the carbon fiber during production, voids may be formed.

On the other hand, by setting the temperature increase rate to 300°C/min to 600°C/min when raising the temperature from 1800°C to 2200°C as in the present production method, the crystal growth of carbon proceeds moderately. Therefore, the carbon fiber is less likely to have structural irregularities. As a result, it is considered that when the oil agent or the like in the surface layer is eliminated from the carbon fiber, since the oil agent or the like is not blown away all at once, voids are less likely to remain. Therefore, a carbon fiber bundle having a high strand strength and a high strand elastic modulus and having reduced defects in single fibers, is obtained.

(Preferred Embodiments)

According to an embodiment, the carbon fiber bundle is obtained by subjecting a precursor fiber bundle to a heating treatment. According to an example, in the heating treatment, a carbonization treatment is performed after a flame resistance treatment. In this case, the carbon fiber bundle is obtained by sequentially subjecting the precursor fiber bundle to a flame resistance treatment and a carbonization treatment. After the carbonization treatment, the carbon fiber bundle may be subjected to a surface oxidation treatment and a sizing treatment as necessary.

Hereinafter, preferred embodiments of the production method for a carbon fiber bundle will be described.

(Precursor Fiber Bundle)

The precursor fiber bundle is a fiber bundle that is subjected to a heating treatment in order to obtain the carbon fiber bundle. The fiber bundle is a bundle of single fibers. Examples of the single fiber of the precursor fiber bundle include a PAN-based fiber, a rayon-based fiber, and a pitch-based fiber.

Among these, as the precursor fiber bundle, a precursor fiber bundle in which single fibers of a PAN-based fiber are bundled is preferable. Hereinafter, the precursor fiber bundle in which single fibers of a PAN-based fiber are bundled is also particularly referred to as a "precursor acrylic fiber bundle".

The precursor acrylic fiber bundle is obtained by, for example, spinning a spinning solution including an acrylonitrile-based polymer into a coagulated yarn. If necessary, the precursor acrylic fiber bundle may be subjected to washing with water, stretching in a bath, oil agent application, drying and densification, stretching, and the like.

The acrylonitrile-based polymer is not particularly limited as long as it has an acrylonitrile unit in the molecular structure. The acrylonitrile-based polymer may be a homopolymer of acrylonitrile or may be a copolymer of acrylonitrile and another monomer (for example, methacrylic acid). In the case of a copolymer, the content proportions of the acrylonitrile unit and other monomer units can be appropriately set according to the properties of the carbon fiber bundle to be produced.

A method for spinning a spinning solution including an acrylonitrile-based polymer is not particularly limited. Examples thereof include wet spinning in which a spinning solution is spun directly into a coagulation bath, dry spinning in which a spinning solution is coagulated in air, and dry-wet spinning in which a spinning solution is first spun in air and then coagulated in a bath.

In the spinning method by wet spinning or dry-wet spinning, the spinning can be performed by spinning the spinning solution through a nozzle having a circular cross-section into a coagulation bath. As the coagulation bath, it is preferable to use an aqueous solution including the solvent used in the spinning solution, from the viewpoint of the ease of solvent recovery.

Among these, dry-wet spinning is preferable from the viewpoint that surface wrinkles on the side surface of the single fiber can be reduced, and the generation of defects due to the surface shape is likely to be suppressed. That is, it is preferable that the precursor acrylic fiber bundle is a fiber bundle obtained by dry-wet spinning a spinning solution including an acrylonitrile-based polymer.

According to an embodiment, the single fiber fineness of the precursor fiber bundle is preferably 0.5 to 2.5 dtex, and more preferably 0.7 to 2.0 dtex.

When the single fiber fineness of the precursor fiber bundle is the lower limit value or more within the numerical value range, a carbon fiber bundle having less yarn breakage is likely to be obtained. When the single fiber fineness of the precursor fiber bundle is the upper limit value or less within the numerical value range, a carbon fiber bundle having small performance irregularity is likely to be obtained.

According to an embodiment, the filament number in the precursor fiber bundle, that is, the number of single fibers of the fiber constituting the precursor fiber bundle, is preferably 8,000 to 20,000, more preferably 10,000 to 18,000, and even more preferably 12,000 to 18,000.

When the filament number in the precursor fiber bundle is the lower limit value or more within the numerical value range, a carbon fiber bundle having improved processability is likely to be obtained. When the filament number in the precursor fiber bundle is the upper limit value or less within the numerical value range, a carbon fiber bundle having improved handleability is likely to be obtained.

(Flame Resistance Treatment)

According to an embodiment, in the flame resistance treatment, the precursor fiber bundle can be converted into a flame-resistant fiber bundle by heating the precursor fiber bundle in an oxidizing atmosphere.

Examples of the flame resistance treatment include a method in which the precursor fiber bundle is allowed to pass through a hot air circulation-type flame-resistant furnace at 180°C to 280°C, preferably until the density of the flame-resistant fiber after the flame resistance treatment reaches 1.28 to 1.42 g/cm$^3$.

When the density of the flame-resistant fiber is the lower limit value or more within the numerical value range, adhesion between single fibers during the subsequent carbonization treatment can be prevented. When the density of the flame-resistant fiber is the upper limit value or less within the numerical value range, the flame resistance treatment does not become excessively long, which is economically efficient.

Examples of the gas of the oxidizing atmosphere include air, oxygen, and nitrogen dioxide. Among these, air is preferable from the viewpoint of economic efficiency.

In one example, the duration of the flame resistance treatment is preferably, for example, 30 to 100 minutes.

According to an embodiment, it is preferable to perform a stretching operation in the flame resistance treatment, from the viewpoint that the orientation of the fibrillar structure is likely to be maintained.

The elongation rate in the flame resistance treatment is preferably 1% to 8%. When the elongation rate in the flame resistance treatment is the lower limit value or more within the numerical value range, it is easy to maintain or improve the orientation of the fibrillar structure. As a result, a carbon fiber bundle having improved mechanical characteristics is likely to be obtained.

When the elongation rate in the flame resistance treatment is the upper limit value or less within the numerical value range, breakage of the fibrillar structure itself is less likely to occur. Since the subsequent formation of the carbon fiber structure is less likely to be impaired, a carbon fiber bundle having high strength is likely to be obtained.

(Carbonization Treatment)

According to an embodiment, the flame-resistant fiber bundle is continuously subjected to a carbonization treatment. In the carbonization treatment, the flame-resistant fiber bundle is carbonized in an inert atmosphere to obtain a carbon fiber bundle.

Examples of the gas of the inert atmosphere include nitrogen, argon, and helium. Among these, nitrogen is preferable from the viewpoint of economic efficiency.

According to an embodiment, the temperature of the carbonization treatment (carbonization treatment temperature) is preferably 300°C to 2,300°C.

It is preferable that the carbonization treatment temperature is raised during the carbonization treatment. In a case of raising the temperature, for example, a plurality of carbonization furnaces can be installed, and the temperature of each carbonization furnace can be set such that the temperature is increased from the carbonization furnace on the upstream side toward the carbonization furnace on the downstream side. The flame-resistant fiber bundle can be sequentially passed through from the carbonization furnace on the upstream side toward the carbonization furnace on the downstream side.

The number of voids and the number of surface layer voids in the carbon fiber can be controlled by regulating the heating temperature, the temperature increase rate, and the like at the time of heating the flame-resistant fiber bundle to perform the carbonization treatment.

The average void length of the carbon fiber can be controlled by regulating the heating temperature or the temperature increase rate at the time of heating the flame-resistant fiber bundle to perform the carbonization treatment.

The average void diameter of the carbon fiber can be controlled by regulating the heating temperature or the temperature increase rate at the time of heating the flame-resistant fiber bundle to perform the carbonization treatment.

The strand elastic modulus of the carbon fiber bundle can be controlled by regulating the heating temperature and the like at the time of heating the flame-resistant fiber bundle to perform the carbonization treatment.

Hereinafter, an example of a case in which the carbonization treatment is performed by raising the carbonization treatment temperature will be described.

According to an embodiment, the flame-resistant fiber bundle can be carbonized by sequentially performing a first carbonization treatment, a second carbonization treatment, and a third carbonization treatment.

In the first carbonization treatment, the flame-resistant fiber bundle can be heat-treated in a first carbonization furnace having a temperature gradient of 300°C to 800°C in an inert atmosphere.

In the second carbonization treatment, the flame-resistant fiber bundle can be heat-treated in a second carbonization furnace having a temperature gradient of 1,000°C to 1,700°C in an inert atmosphere.

In the third carbonization treatment, the flame-resistant fiber bundle can be heat-treated in a third carbonization furnace having a temperature gradient of 1,200°C to 2,500°C in an inert atmosphere.

Regarding the temperature gradient in the first carbonization treatment, a linear gradient is preferred from 300°C to 800°C, and a linear gradient is more preferred from 300°C to 700°C. The temperature gradient in the first carbonization treatment does not have to be a linear gradient.

In one example, the start temperature (minimum temperature) of the first carbonization treatment is preferably 300°C or higher. The highest temperature of the first carbonization treatment is preferably 800°C or lower. When the highest temperature of the first carbonization treatment is 800°C or lower, embrittlement of the process fiber is likely to be suppressed.

In one example, the treatment time of the first carbonization treatment is preferably 1 to 3 minutes. When the treatment time of the first carbonization treatment is the lower limit value or more within the numerical value range, a decomposition reaction caused by a rapid temperature increase is less likely to occur, and a carbon fiber bundle having high strength is likely to be obtained. When the treatment time of the first carbonization treatment is the upper limit value or less within the numerical value range, the decrease in the degree of crystal orientation is suppressed. Therefore, a carbon fiber bundle having improved mechanical characteristics is likely to be obtained.

With regard to the first carbonization treatment, it is preferable to perform a stretching operation from the viewpoint that the orientation of the fibrillar structure is likely to be maintained. When the stretching operation is performed, the elongation rate in the first carbonization treatment is preferably 2% to 7%.

When the elongation rate in the first carbonization treatment is the lower limit value or more within the numerical value range, it is easy to maintain or improve the orientation of the fibrillar structure. As a result, a carbon fiber bundle having improved mechanical characteristics is likely to be obtained.

When the elongation rate in the first carbonization treatment is the upper limit value or less within the numerical value range, breakage of the fibrillar structure itself is less likely to occur. Since the subsequent formation of the carbon fiber structure is less likely to be impaired, a carbon fiber bundle having high strength is likely to be obtained.

Regarding the temperature gradient in the second carbonization treatment, a linear gradient is preferred from 1,000°C to 1,750°C, and a linear gradient is more preferred from 1,000°C to 1,700°C. The temperature gradient in the second carbonization treatment does not have to be a linear gradient.

The temperature in the second carbonization treatment can be set according to the desired strand elastic modulus required for the carbon fiber bundle. In order to obtain a carbon fiber having improved mechanical characteristics, it is preferable that the highest temperature of the second carbonization treatment is low. By lowering the highest temperature in the second carbonization treatment and increasing the treatment time, a carbon fiber bundle having a high strand elastic modulus is likely to be obtained. In addition, when the treatment time in the second carbonization treatment is longer, the temperature gradient can be made moderate. Therefore, there is also an effect of suppressing the formation of the defect points.

In one example, the lowest temperature of the second carbonization treatment is preferably 1,100°C or higher. The highest temperature of the second carbonization treatment is preferably 1,700°C or lower.

In one example, the treatment time of the second carbonization treatment is preferably 1 to 3 minutes.

In the second carbonization treatment, since the process fiber is accompanied with large shrinkage, the elongation rate is preferably -6% to 0%. However, it is preferable to perform the carbonization treatment under tension even in that case. When the elongation rate in the second carbonization treatment is the lower limit value or more within the numerical value range, the orientation properties in the fiber axis direction of the crystals are less likely to be reduced, and sufficient tensile characteristics are obtained. When the elongation rate in the second carbonization treatment is the upper limit value or less within the numerical value range, the structure formed so far is less likely to be broken, and the strength can be maintained in a favorable manner.

Regarding the temperature gradient in the third carbonization treatment, a linear gradient is preferred from 1,200°C to 2,500°C, and a linear gradient is more preferred from 1,200°C to 2,400°C. The temperature gradient in the third carbonization treatment does not have to be a linear gradient.

The lowest temperature of the third carbonization treatment is preferably 1,800°C or higher. The highest temperature of the third carbonization treatment is preferably 2,100°C to 2,300°C and is more preferably 2,290°C or lower. When the highest temperature of the third carbonization treatment is 2,100°C or higher, the strand elastic modulus is likely to be increased. When the highest temperature of the third carbonization treatment is 2,300°C or lower, the lifetime of the furnace material in the third carbonization furnace is likely to be maintained long.

In one example, the treatment time of the third carbonization treatment is preferably 1 to 3 minutes.

In one example, the total treatment time of the second carbonization treatment and the third carbonization treatment is preferably 2 to 6 minutes.

During the third carbonization treatment, the temperature increase rate in a case of raising the heating temperature from 1,800°C to 2,200°C is preferably 300°C/min to 600°C/min, more preferably 350°C/min to 550°C/min, and even more preferably 400°C/min to 500°C/min. When the temperature increase rate is the lower limit value or more within the numerical value range, productivity is improved. When the temperature increase rate is the upper limit value or less within the numerical value range, the number of voids is reduced. Therefore, a carbon fiber bundle having a high strand strength and a high strand elastic modulus is likely to be obtained.

The reason why the voids become small is as described above. That is, since the crystal growth of carbon proceeds moderately by slowing down the temperature increase rate, structural irregularities are less likely to occur. As a result, it is considered that when the oil agent or the like in the surface layer is eliminated from the carbon fiber, since the oil agent or the like is not blown away all at once, voids are less likely to remain.

In the third carbonization treatment, since the process fiber is accompanied with large shrinkage, the elongation rate is preferably -6% to 0%. However, it is preferable to perform the carbonization treatment under tension even in that case.

When the elongation rate in the third carbonization treatment is the lower limit value or more within the numerical value range, the orientation properties in the fiber axis direction of the crystals are less likely to be reduced. Therefore, sufficient tensile characteristics are likely to be obtained.

When the elongation rate in the second carbonization treatment is the upper limit value or less within the numerical value range, the structure formed so far is less likely to be broken. Therefore, strength is likely to be maintained in a favorable manner.

The total elongation rate of the second carbonization treatment and the third carbonization treatment is preferably -5% to 0%.

In the above-described carbonization treatment, the carbonization treatment temperature is raised using three carbonization furnaces having different temperature gradients; however, the number of carbonization furnaces used for the carbonization treatment may be two or may be four or more.

A plurality of heating zones may be installed in one carbonization furnace, the temperature of each heating zone may be set such that the temperature increases from the heating zone on the upstream side toward the heating zone on the downstream side, and the flame-resistant fiber bundle may be allowed to sequentially pass through the heating zones from the heating zone on the upstream side toward the heating zone on the downstream side.

In all of the methods, the temperature increase rate in a case of raising the temperature from 1,800°C to 2,200°C during the carbonization treatment is preferably 300°C/min to 600°C/min, more preferably 350°C/min to 550°C/min, and even more preferably 400°C/min to 500°C/min.

(Surface Oxidation Treatment)

The method for a surface oxidation treatment is not particularly limited. Various methods can be employed. Examples thereof include electrolytic oxidation, chemical oxidation, and air oxidation. Among these, from the viewpoint of enabling a stable surface oxidation treatment, electrolytic oxidation that is industrially widely carried out is preferable.

In the surface oxidation treatment, it is preferable that ipa representing a state of surface treatment is set to 0.05 to 0.25 $\mu$A/cm$^2$. In order to control the value within such a range, a method of adjusting the amount of electricity by an electrolytic oxidation treatment is convenient. In the electrolytic oxidation treatment, the ipa can vary greatly depending on the electrolyte used and the concentration thereof, even with the same amount of electricity. For example, in an alkaline aqueous solution having a pH of more than 7, it is preferable to perform the oxidation treatment by using the carbon fiber as an anode and passing electricity in an amount of 10 to 200 coulombs/g.

Examples of the electrolyte include ammonium carbonate, ammonium bicarbonate, ammonium sulfate, calcium hydroxide, sodium hydroxide, and potassium hydroxide.

(Sizing Treatment)

A sizing treatment can be carried out by, for example, applying a sizing agent dissolved in an organic solvent or a sizing agent emulsion liquid dispersed in water with an emulsifier or the like on the carbon fiber bundle by a roller immersion method, a roller contact method, or the like, and then drying the carbon fiber bundle.

The sizing agent is not particularly limited. Various sizing agents can be used. Examples thereof include sizing agents containing an epoxy resin, a polyether resin, an epoxy-modified polyurethane resin, or a polyester resin as a main component.

The amount of the sizing agent adhering to the surface of the carbon fiber can be controlled by adjusting the concentration of the sizing agent liquid or the amount of squeezing. For the drying, hot air, a hot plate, a heating roller, various infrared heaters, and the like can be utilized.

According to the production method for a carbon fiber bundle as described above, the number of voids present in a cross-section of a single fiber of a carbon fiber can be reduced. Therefore, a carbon fiber bundle having a high strand strength and a high strand elastic modulus and having reduced defects in single fibers, is obtained.

[Use Applications]

The carbon fiber bundle according to the present invention is molded as a composite material by being combined with, for example, a matrix resin and then is utilized for various use applications.

The matrix resin is not particularly limited. Examples thereof include thermosetting resins such as an epoxy resin and a phenol resin; radical polymerizable resins such as an acrylic resin, a vinyl ester resin, and an unsaturated polyester resin; and thermoplastic resins such as a thermoplastic acrylic resin, a polyamide resin, a polyimide resin, a polycarbonate resin, a polypropylene resin, and a polyethylene resin. In addition, modified products of these resins can also be used. In addition, a commercially available product may be used as the matrix resin.

The use applications of a composite material obtained from the carbon fiber bundle are not particularly limited. Examples thereof include members for automobiles, aerospace materials, materials for public works, construction materials, sports materials, leisure materials, and industrial materials (pressure vessels, wind turbine blades, and the like); however, the use applications are not limited to these, and the composite material can be used for various use applications.

[Examples]

Hereinafter, the present invention will be specifically described by way of Examples. Note that the present invention is not limited by the following description.

The various measurement methods performed in the present Examples are as follows.

[Method for Measuring Diameter of Carbon Fiber]

The cross-sectional area per single fiber of the carbon fiber was calculated from the density (g/cm$^3$) of the carbon fiber bundle, the mass per meter (mg/m) of the carbon fiber bundle, and the filament number in the carbon fiber bundle. The diameter of a perfect circle having an area equal to the cross-sectional area was calculated and used as the diameter of a single fiber of the carbon fiber.

[Method for Measuring Fiber Density of Carbon Fiber]

The density of the carbon fiber was measured in conformity with method C (density gradient tube method) described in JIS R 7063:1999.

[Method for Measuring Number of Voids and Number of Surface Layer Voids]

A thin slice having a thickness of 100 nm was produced from a cross-section of a single fiber of the carbon fiber in a direction perpendicular to the fiber axis, using a focused ion beam ("FB-2100" manufactured by Hitachi High-Tech Corporation). For the thin slice, the cross-section of the carbon fiber in a direction perpendicular to the fiber axis was observed using a transmission electron microscope ("H-7600" manufactured by Hitachi High-Tech Corporation) at an acceleration voltage of 80 kV in an observation mode of HC-mode at a magnification of 20,000 times, and a transmission electron microscope (TEM) image was obtained. The obtained TEM image was subjected to a planarization treatment and a binarization treatment using image analysis software (manufactured by Roper Technologies, Inc., "Image-Pro PLUS ver. 7.0"). Thereafter, white portions present in the cross-section were taken as voids, and the number of the voids and the circumference of the carbon fiber were measured, by using a "Count/Measurement" function of the image analysis software. The same measurement was performed five times in total, and the average value of the numbers was designated as the number of voids present in the cross-section of a single fiber of the carbon fiber (number of voids).

Here, the surface of the carbon fiber was defined as the surface of the carbon fiber itself. The surface of the sizing agent adhering to the surface of the carbon fiber is not the surface of the carbon fiber. As a measurement sample, a carbon fiber before the sizing agent was allowed to adhere, or a carbon fiber from which the sizing agent was removed, was used.

[Method for Calculating Average Void Length and Average Void Diameter]

According to the Ruland method described in Macromolecules, Vol. 33, No. 5, 2000, the average void length and the average void diameter were calculated by small-angle X-ray scattering method (SAXS) as follows.

First, "SAXSpoint 2.0 system" manufactured by Anton Paar GmbH was used, CuKα (wavelength: 1.54 Å) was used as X-rays, the exposure time was set to 30 minutes, the measurement environment was set to a vacuum, and the distance from the sample to the detector was set to 610 mm. After the carbon fiber bundle was aligned in one direction, the carbon fiber bundle was set on a sample stage, with the fiber axis direction set to be vertical, and then small-angle X-ray scattering measurement was performed. In this case, scattering originating from the voids inside the carbon fiber was observed in a direction perpendicular to the fiber axis.

Next, an analysis according to the Ruland method was performed using graph creation software (Igor Pro 8.0). In the present Example, a scattering vector q was defined as $4\pi\sin\theta/\lambda$. ($\theta$: scattering angle, $\lambda$: X-ray wavelength). A two-dimensional scattering profile obtained under the above-described measurement conditions was subjected to polar coordinate transformation by dividing the azimuthal angle of 360° into 1000 parts, and a scattering intensity map of the azimuthal angle-scattering vector q was obtained.

Here, the carbon fiber axis direction was set to an azimuthal angle of 0°. For the obtained scattering intensity map, an analysis according to the Ruland method was performed in a direction perpendicular to the axis of the carbon fiber (azimuthal angle of 90°) and to the extent that streaks originating from X-ray total reflection on the surface of the carbon fibers were not included (q = 0.8 to 1.86 mn$^{-1}$). Specifically, an azimuthal angle vs. scattering intensity profile was obtained for each q by averaging the azimuthal angle for every 5 pixels in the direction q of the scattering intensity map of the azimuthal angle-scattering vector q. This profile over the range of the azimuthal angle of 0° to 180° was fitted with a Gaussian function, and the integral width B was calculated.

Subsequently, $q^2 B^2$ is plotted against $q^2$, and an approximation straight line is obtained. The void length L is calculated from the intercept $(2\pi/L)^2$ obtained from the approximation straight line.

In addition, the scattering profile in a direction perpendicular to the fiber axis was cut out. Fitting was performed according to the Ruland method described in Macromolecules, Vol. 33, No. 5, 2000, and the average void diameter of the voids present in the cross-section of a single fiber of the carbon fiber was calculated.

[Method for Calculating Area Ratio of Low-Density Portion and Degree of Complete Crystallinity of Substrate Structure]

As a measurement sample, a thin slice for TEM observation having a thick film part of 120 nm and a thin film part of 75 nm was produced using an FIB processing apparatus "Helios G4" manufactured by Thermo Fisher Scientific, Inc. The thin slice for TEM observation was stored in a vacuum chamber.

The density of the surface film was measured using an analytical transmission scanning electron microscope (manufactured by JEOL, Ltd., "JEM-ARM300F"), with the acceleration voltage adjusted to 80 kV, in the HAADF-STEM condition under the conditions of a camera lens of 98 mm. Under these conditions, the intensity $I_s$ of HAADF-STEM with a take-in angle of 37 to 200 mrad, which brings the most structural information without causing the Bragg reflection to be incorporated, can be acquired.

$I_s$ is proportional to the value $\sigma_{\theta1\theta2}$ obtained by integrating the Rutherford scattering intensity from θ1 to θ2 as shown in Expression (1), the number of atoms N, and the sample thickness t, with respect to the intensity $I_0$ of the incident electron beam.

$$I_s = \sigma_{\theta1\theta2} \cdot N \cdot t \cdot I_0 \ ... \ (1)$$

Measurement of the $I_s$ value according to the HAADF-STEM method is suitable as a technique for measuring the density of a target nano region. In the present measurement, the $I_s$ value was measured at $2048 \times 2048$ points with

an electron beam probe narrowed to 0.07 nmcp. The location of observation was a third region from the center side when the fiber was divided into four parts from the fiber center toward the outside. The observation range was set to 204 nm $\times$ 204 nm.

The texture in the observation field is assumed to be the $I_s$ information from a test piece having an equal sample thickness. Therefore, in the method for calculating the density from the ratio of the $I_s$ value measured at each point, the sample thickness t in Expression (1) can be ignored. The $I_s$ values of the substrate, an amorphous portion, and the voids were measured for a thin film part of 25 nm.

In the present measurement, Expression (1) is satisfied only in a thin film region in which there is no increase in the $\Delta I_s$ value at $\Delta t$ caused by the expression of an electron beam multiple scattering effect. Thus, the results of determining the standardization density value from the measurement of determining the $\Delta I_s$ value at the unit thickness $\Delta t$, were used so that the influence of the thickness t in the comparison of samples is taken into consideration.

The electron density distribution at an intensity of zero obtained by the above-described measurement was designated as the area ratio of the low-density portion, and the median value of the electron density distribution was designated as the degree of complete crystallinity of the substrate structure.

[Method for Measuring Strand Strength and Strand Elastic Modulus of Carbon Fiber Bundle]

In conformity with JIS R 7608:2007, the strand strength of the carbon fiber bundle was measured. The strand elastic modulus was calculated according to method A of JIS R 7608:2007.

[Example 1]

(Preparation of precursor fiber bundle)

An acrylonitrile-based copolymer containing 98% by mass of an acrylonitrile unit and 2% by mass of a methacrylic acid unit was dissolved in dimethylformamide. A spinning solution having a content of the acrylonitrile copolymer of 23.5% by mass was prepared.

This spinning solution was ejected through a spinneret in which 12,000 ejection holes each having a diameter of 150 $\mu$m were arranged, and was subjected to dry-wet spinning. The spinning solution was spun in air and allowed to pass through a space of about 5 mm, and then the resultant was introduced into a coagulating liquid filled with an aqueous solution containing 79.0% by mass of dimethylformamide to be coagulated. The coagulating liquid was regulated in advance to 10°C.

Next, the resultant was stretched 1.1 times in air and then was stretched 2.5 times in a stretching bath filled with an aqueous solution containing 35% by mass of dimethylformamide. The aqueous solution in the stretching bath was regulated in advance to 60°C.

Furthermore, a process fiber bundle containing the solvent was washed with pure water. Thereafter, the process fiber bundle was stretched 1.4 times in hot water at 95°C. Subsequently, an oil agent containing an amino-modified silicone as a main component was applied to the process fiber bundle such that the amount of the oil agent was 1.1% by mass with respect to the fiber mass, and then the process fiber bundle was dried and densified. The process fiber bundle after drying and densification was stretched 2.6 times between heated rolls to achieve further improvement of the orientation and densification. Thereafter, a precursor fiber bundle (precursor acrylic fiber bundle) was obtained by winding up. The single fiber fineness of the precursor fiber bundle was 0.77 dtex.

(Production of Carbon Fiber Bundle)

A plurality of the precursor fiber bundles were introduced, in a state of being aligned in parallel, into a flame-resistant furnace having a temperature gradient of 220°C to 280°C in an air atmosphere. The precursor fiber bundle was heated while applying an elongation of 6% to obtain a flame-resistant fiber bundle having a density of 1.345 g/cm$^3$. The flame resistance treatment time was set to 70 minutes.

Next, the flame-resistant fiber bundle was heated in a first carbonization furnace having a temperature gradient of 300°C to 700°C in a nitrogen atmosphere while applying an elongation of 4.5%, and thereby a first carbonization treatment was performed. The temperature gradient was set to be linear. The treatment time was set to 2.0 minutes.

Subsequently, a second carbonization treatment was performed using a second carbonization furnace having a temperature gradient of 1,000°C to 1,700°C in a nitrogen atmosphere. Subsequently, a third carbonization treatment was performed using a third carbonization furnace having a temperature gradient of 1,200°C to 2,400°C in a nitrogen atmosphere to obtain a carbonized fiber bundle. In that case, the total elongation rate in the second carbonization furnace and the third carbonization furnace was set to -4.0%, and the treatment time was set to 3.5 minutes.

The lowest temperature in the second carbonization furnace was set to 1,100°C, and the highest temperature was set to 1,200°C. In addition, the lowest temperature in the third carbonization furnace was set to 1,800°C, and the highest temperature was set to 2,300°C. The temperature increase rate when raising the heating temperature in the third carbonization furnace was raised from 1,800°C to 2,200°C was set to 453°C/min.

The temperature gradients in the second carbonization furnace and the third carbonization furnace were set to be linear.

Subsequently, while the carbonized fiber bundle was allowed to travel in a 10% by mass aqueous solution of ammonium bicarbonate, an electrification treatment was performed by using the carbonized fiber bundle as an anode and applying electricity between the carbonized fiber bundle and a counter electrode such that the amount of electricity was 40 coulombs per gram of the carbonized fiber to be treated. Next, the obtained carbonized fiber bundle was washed with hot water at 90°C and then dried. Next, a sizing agent (manufactured by DIC Corporation, "HYDRAN N320") was adhered such that the amount of adhesion was 0.5% by mass (sizing treatment), and a carbon fiber bundle was obtained by winding around a bobbin.

For the carbon fiber bundle after the sizing treatment, the diameter and the number of single fibers, the mass per meter of the carbon fiber bundle (mg/m) and the density ($g/m^3$) of the carbon fiber bundle, the average void length, the average void diameter, the number of voids, the number of surface layer voids, the strand strength, the strand elastic modulus, the area ratio of a low-density portion, and the degree of complete crystallinity of the substrate structure were measured. These results are shown in Table 1.

[Examples 2 to 6]

Carbon fiber bundles were produced in the same manner as in Example 1, except that the setting temperatures (the lowest temperature and the highest temperature) of the second carbonization furnace were changed as shown in Table 1, and various measurements were performed. The results are shown in Table 1.

[Comparative Example 1]

A precursor fiber bundle was prepared in the same manner as in Example 1, except that the single fiber fineness was changed to 1.0 dtex.

A carbon fiber bundle was produced in the same manner as in Example 1, except that the obtained precursor fiber bundle was used, the setting temperatures (the lowest temperature and the highest temperature) of the second carbonization furnace, the setting temperatures (the lowest temperature and the highest temperature) of the third carbonization furnace, and the temperature increase rate were changed as shown in Table 1, and various measurements were performed. The results are shown in Table 1.

[Comparative Example 2]

Various measurements were performed on a commercially available carbon fiber bundle (manufactured by Toray Industries, Inc., "M40JB"). The results are shown in Table 1.

[Table 1]

| | Carbonization treatment | | | | Temperature increase rate | Carbon fiber | | | | | | | | | Carbon fiber bundle | | |
|---|---|---|---|---|---|---|---|---|---|---|---|---|---|---|---|---|---|
| | Second carbonization furnace | | Third carbonization furnace | | | Number of voids | Number of surface layer voids | Diameter | Mass per meter | Fiber density | Average void length | Average void diameter | Area ratio of low-density portion | Degree of complete crystallinity of substrate structure | Number of carbon fibers | Strand strength | Strand elastic modulus |
| | Lowest temperature [°C] | Highest temperature [°C] | Lowest temperature [°C] | Highest temperature [°C] | °C/min | voids | Voids/μm | μm | mg/m | g/cm³ | nm | nm | % | [-] | fibers | GPa | GPa |
| Example 1 | 1100 | 1200 | 1800 | 2300 | 453 | 0 | 0 | 53 | 474 | 1.81 | 18.9 | 059 | 0.14 | 0.43 | 12000 | 551 | 370 |
| Example2 | 1100 | 1300 | 1800 | 2300 | 453 | 0 | 0 | 53 | 475 | 1.81 | 18.4 | 0.60 | 0.11 | 052 | 12000 | 5.88 | 375 |
| Example 3 | 1100 | 1400 | 1800 | 2300 | 453 | 0 | 0 | 53 | 473 | 1.82 | 19.0 | 0.63 | 0.11 | 0.48 | 12000 | 5.61 | 375 |
| Example4 | 1100 | 1500 | 1800 | 2300 | 453 | 0 | 0 | 53 | 474 | 1.82 | 18.7 | 0.61 | 0.10 | 055 | 12000 | 594 | 374 |
| Example 5 | 1100 | 1600 | 1800 | 2300 | 453 | 0 | 0 | 53 | 474 | 1.82 | 18.0 | 0.61 | 0.06 | 058 | 12000 | 6.27 | 376 |
| Example 6 | 1100 | 1700 | 1800 | 2300 | 453 | 0 | 0 | 52 | 471 | 1.82 | 18.7 | 0.60 | 0.05 | 0.61 | 12000 | 6.27 | 376 |
| Comparative Example 1 | 1200 | 1600 | 2000 | 2300 | 827 | 16 | 0.9 | 5.9 | 600 | 1.82 | 223 | 0.71 | 025 | 0.37 | 12000 | 451 | 373 |
| Comparative Example 2 | - | - | - | - | - | 690 | 423 | 52 | 450 | 1.77 | 22.7 | 0.63 | 0.07 | 0.42 | 12000 | 4.40 | 377 |

The term "Temperature increase rate (°C/min)" in Table 1 is a temperature increase rate in a case of raising the temperature from 1,800°C to 2,200°C.

As is obvious from the results in Table 1, the carbon fiber bundle obtained in each of the Examples had a high strand strength and a high strand elastic modulus.

On the other hand, in the carbon fibers of Comparative Example 1 and Comparative Example 2, a large number of voids were present in a region extending from the surface of the carbon fiber to a depth of 100 nm, and the average void length was large. In addition, the carbon fiber bundles of Comparative Example 1 and Comparative Example 2 had a lower strand strength as compared with the carbon fiber bundle obtained in each of the Examples.

[Industrial Applicability]

According to the carbon fiber of the present invention, a carbon fiber bundle having a high strand strength and a high strand elastic modulus is obtained. In addition, the carbon fiber of the present invention has reduced defects.

The carbon fiber bundle of the present invention has a high strand strength and a high strand elastic modulus and has reduced defects in the single fibers.

According to the method for producing a carbon fiber bundle of the present invention, a carbon fiber bundle having a high strand strength and a high strand elastic modulus and having reduced defects in the single fibers is obtained.

**Claims**

1. A carbon fiber in which the number of voids in a cross-section of a single fiber is 8 or less,
   method for measuring the number of voids: a single fiber of the carbon fiber is cut perpendicularly to a longitudinal direction, subsequently a thin slice including a cross-section of the carbon fiber is prepared, a TEM image at a magnification of 20,000 times of the cross-section of the carbon fiber in the thin slice is acquired by using a transmission electron microscope, the TEM image is subjected to a planarization treatment and a binarization treatment by using image analysis software, and then the number of white portions present in the cross-section is measured as the number of voids by using a "Count/Measurement" function of the image analysis software.

2. The carbon fiber according to Claim 1,
   wherein the carbon fiber has an average void length of 5 to 20 nm.

3. The carbon fiber according to Claim 1,
   wherein the carbon fiber has an average void diameter of 0.5 to 0.7 nm.

4. The carbon fiber according to Claim 1,
   wherein the carbon fiber has a diameter of 4.0 to 7.0 $\mu$m.

5. The carbon fiber according to Claim 1,
   wherein the carbon fiber has a fiber density of 1.70 to 1.90 g/cm$^3$.

6. The carbon fiber according to Claim 1,
   wherein an area ratio of a low-density portion in the carbon fiber is 0.24% or less.

7. The carbon fiber according to Claim 1,
   wherein a degree of complete crystallinity of a substrate structure in the carbon fiber is 0.43 or more.

8. A carbon fiber bundle comprising:
   the carbon fiber according to any one of claims 1 to 7.

9. The carbon fiber bundle according to Claim 8,
   wherein the carbon fiber bundle has a strand strength of 5.0 to 6.5 GPa.

10. The carbon fiber bundle according to Claim 8,
    wherein the carbon fiber bundle has a strand elastic modulus of 360 to 400 GPa.

11. The carbon fiber bundle according to Claim 8,
    wherein the number of the carbon fibers in the carbon fiber bundle is 8,000 to 20,000.

12. A production method for a carbon fiber bundle, the method comprising:

heating a precursor fiber bundle,
wherein a temperature increase rate in a case of raising a heating temperature from 1,800°C to 2,200°C is 300°C/min to 600°C/min.

13. The production method according to Claim 12,
wherein a highest temperature of the heating temperature is 2,100°C to 2,300°C.

14. The production method according to Claim 12,
wherein the precursor fiber bundle is a fiber bundle obtained by dry-wet spinning.

15. The production method according to Claim 12,

wherein a single fiber fineness of the precursor fiber bundle is 0.5 to 2.5 dtex, and
the number of single fibers in the precursor fiber bundle is 8,000 to 20,000.

## INTERNATIONAL SEARCH REPORT

| International application No. |
|---|
| **PCT/JP2022/041607** |

**A. CLASSIFICATION OF SUBJECT MATTER**

*D01F 9/22*(2006.01)i
FI: D01F9/22

According to International Patent Classification (IPC) or to both national classification and IPC

**B. FIELDS SEARCHED**

Minimum documentation searched (classification system followed by classification symbols)

D01F1/00-6/96, 9/00-9/32

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2-74621 A (TORAY INDUSTRIES, INC) 14 March 1990 (1990-03-14)<br>p. 2, upper left column, line 3, p. 3, lower left column, lines 4-10, p. 4, upper right column, line 8 to p. 5, lower right column, examples, tables 1-2 | 1-15 |
| X | CN 110409018 A (ZHONGFU SHENYING CARBON FIBER CO., LTD.) 05 November 2019 (2019-11-05)<br>claims, paragraphs [0008]-[0009], [0026]-[0034], examples, fig. 1 | 1-15 |
| A | WO 2020/195476 A1 (TORAY INDUSTRIES, INC) 01 October 2020 (2020-10-01)<br>entire text | 1-15 |
| A | JP 48-2881 B1 (MITSUBISHI RAYON CO., LTD.) 27 January 1973 (1973-01-27)<br>entire text | 1-15 |
| A | WO 2016/121569 A1 (TORAY INDUSTRIES, INC) 04 August 2016 (2016-08-04)<br>entire text | 1-15 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 January 2023** | **24 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/041607**

| Patent document cited in search report | | | Publication date (day/month/year) | Patent family member(s) | | | Publication date (day/month/year) |
|---|---|---|---|---|---|---|---|
| JP | 2-74621 | A | 14 March 1990 | (Family: none) | | | |
| CN | 110409018 | A | 05 November 2019 | (Family: none) | | | |
| WO | 2020/195476 | A1 | 01 October 2020 | US entire text CN KR | 2022/0170183 113597484 10-2021-0141499 | A1 A A | |
| JP | 48-2881 | B1 | 27 January 1973 | (Family: none) | | | |
| WO | 2016/121569 | A1 | 04 August 2016 | US entire text EP KR TW | 2017/0373325 3252855 10-2017-0107480 201708101 | A1 A1 A A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021183635 A
- WO 2018003836 A
- WO 2020195476 A

**Non-patent literature cited in the description**

- *Macromolecules,* 2000, vol. 33 (5